**Europäisches Patentamt**

**European Patent Office**

**Office européen des brevets**

(19)

(11) Veröffentlichungsnummer: **0 201 817**

**A2**

(12) # EUROPÄISCHE PATENTANMELDUNG

(21) Anmeldenummer: **86106043.2**

(22) Anmeldetag: **02.05.86**

(51) Int. Cl.⁴: **B 25 B 1/22**
**B 25 B 5/08**

(30) Priorität: **11.05.85 DE 3517033**

(43) Veröffentlichungstag der Anmeldung:
**20.11.86 Patentblatt 86/47**

(84) Benannte Vertragsstaaten:
**AT BE CH FR GB IT LI NL SE**

(71) Anmelder: **Reiling, Reinhold**
**Remchinger Strasse 4**
**D-7535 Königsbach-Stein(DE)**

(71) Anmelder: **Reiling, Karl**
**Remchinger Strasse 4**
**D-7535 Königsbach-Stein(DE)**

(72) Erfinder: **Reiling, Reinhold**
**Remchinger Strasse 4**
**D-7535 Königsbach-Stein(DE)**

(72) Erfinder: **Reiling, Karl**
**Remchinger Strasse 4**
**D-7535 Königsbach-Stein(DE)**

(74) Vertreter: **Hubbuch, Helmut, Dipl.-Ing et al,**
**Patentanwälte Dr. Rudolf Bauer Dipl.-Ing. Helmut**
**Hubbuch Dipl.-Phys. Ulrich Twelmeier Westliche**
**Karl-Friedrich-Strasse 29-31**
**D-7530 Pforzheim(DE)**

(54) **Universalhalter.**

(57) Die Erfindung betrifft einen Universalhalter mit Basisteil,
insbes. in Form einer an einem Werktisch befestigbaren
Schraubzwinge und einer Halterung für Bearbeitungsvorrichtungen oder- Maschinen mit in gewählter Stellung
festspannbarem Kugelgelenk. Hierbei soll eine einfache und
schnell zu bedienende und sicher zu handhabende Fixierung
des Kugelgelenks erreicht und überdies auch eine Feineinstellung im gewählten Winkel ermöglicht werden. Hierfür ist
bei verhältnismäßig weichem Material der Gelenkkugel, z.B.
Kunststoff oder Zinkguß, in der Kugelaufnahme das verschiebbare Gegenlager in Form einer Ringhülse aus hartem
Material, z.B. Stahl, gebildet und liegt der Gelenkkugel
mittels Ringkante zum Festspannen an.

Fig.3

## Beschreibung

Die Erfindung bezieht sich auf einen Universalhalter mit Basisteil, insbes. in Form einer an einem Werktisch befestigbaren Schraubzwinge und einer Halterung für Bearbeitungsvorrichtungen oder - Maschinen mit in gewählter Stellung festspannbarem Kugelgelenk.

Es gibt einerseits solche Haltevorrichtungen ohne Kugelgelenk für handgeführte Maschinen, wie Handbohrmaschinen mit Schraubzwinge zur Befestigung am Werktisch sowie andererseits einem fest angeordneten Spannauge für den Maschinenhals. Solche Haltevorrichtungen sind zur Bearbeitung von Werkstücken nur wenig variabel anzuordnen.

Auch sind Haltevorrichtungen mit Kugelgelenk für Spannbacken bekannt, bei welchen die zweiteilige Kugelpfanne zum Festlegen der Gelenkkugel mittels wenigstens drei Imbusschrauben zusammenspannbar ist. Dies ist für genaue Lageeinstellung der Spannbacken diffizil und zeitraubend und erfordert überdies zusätzliches Handswerkzeug, wie Schraubschlüssel.

Desweiteren sind z.B. nach der GB-PS 664 504 und 16 00 197 solche Haltevorrichtungen bekannt mit in gewählter Stellung festlegbarem Kugelgelenk, wobei die Gelenkkugel mit Tragstutzen für einen Spannhalter in einer Kugelaufnahme mittels Gegenlager verspannbar ist und diese durch zwei zueinander verschiebbare Napfhülsen gebildet sind, an welchen einerseits der Tragstutzen schwenkbar austritt, während andererseits das Gegenlager durch Verschieben gegen die Gelenkkugel zu deren Festlegungen preßbar ist. Hierbei ist jedoch
eine sichere Festlegung nur mit großem Kraftaufwand über
die Reibungsflächen an den Napfhülsen möglich und damit
eine einwandfreie Positionierung schwierig.

Es ist nun Aufgabe der Erfindung hier eine einfach und
schnell zu bedienende und sicher zu handhabende Festklemmung
des Kugelgelenks zu erreichen und überdies auch eine Feineinstellung im gewählten Winkel zu ermöglichen.

Diese Aufgabe wird beim Universalhalter nach dem Oberbegriff
von Anspruch 1, dadurch gelöst, daß bei verhältnismäßig
weichem Material der Gelenkkugel, z.B. Kunststoff oder Zinkguß, in der Kugelaufnahme (Napfhülse) das verschiebbare
Gegenlager in Form einer Ringhülse aus hartem Material, z.B.
Stahl,gebildet ist und der Gelenkkugel mittels Ringkante
zum Festspannen anliegt. Hierdurch wird bei geringem Kraftaufwand durch den Eindruck der Ringkante im Kugelmaterial
eine unverrückbare Fixierung gewährleistet.

Im einzelnen kann hierbei die Kugelaufnahme als Napfhülse
mit Austrittsöffnung und Seitenschlitz für den Tragstutzen
mit dem Randteil drehbar in einer Lochung am Basisteil
sitzen und die Ringhülse als Gegenlager unmittelbar einer
exzentrischen Welle mit Schenkhebel zum Gegenspannen aufsitzen und über die Gelenkkugel auch die Napfhülse dreh-
und spannbar halten. Dies führt zu einer einfachen mit
wenig Aufwand herzustellenden und zusammen zu bauenden
Vorrichtung.

Eine bevorzugte Ausführungsform eines Universalhalters mit Variation des auswechselbaren Halters ist beispielsweise in der Zeichnung dargestellt und zwar zeigen:

Figur 1 und 2    zwei Seitenansichten der Schraubzwinge mit Kugelgelenk und Tragstutzen für einen Spannhalter,

Figur 3    den vergrößerten Schnitt durch das Kugelgelenk,

Figur 4    die perspektivische Ansicht eines Spannauges als Spannhalter,

Figur 5    die perspektivische Ansicht von Spannbacken als Spannhalter und

Figur 6    die perspektivische Ansicht einer Werkplatte als Spannhalter.

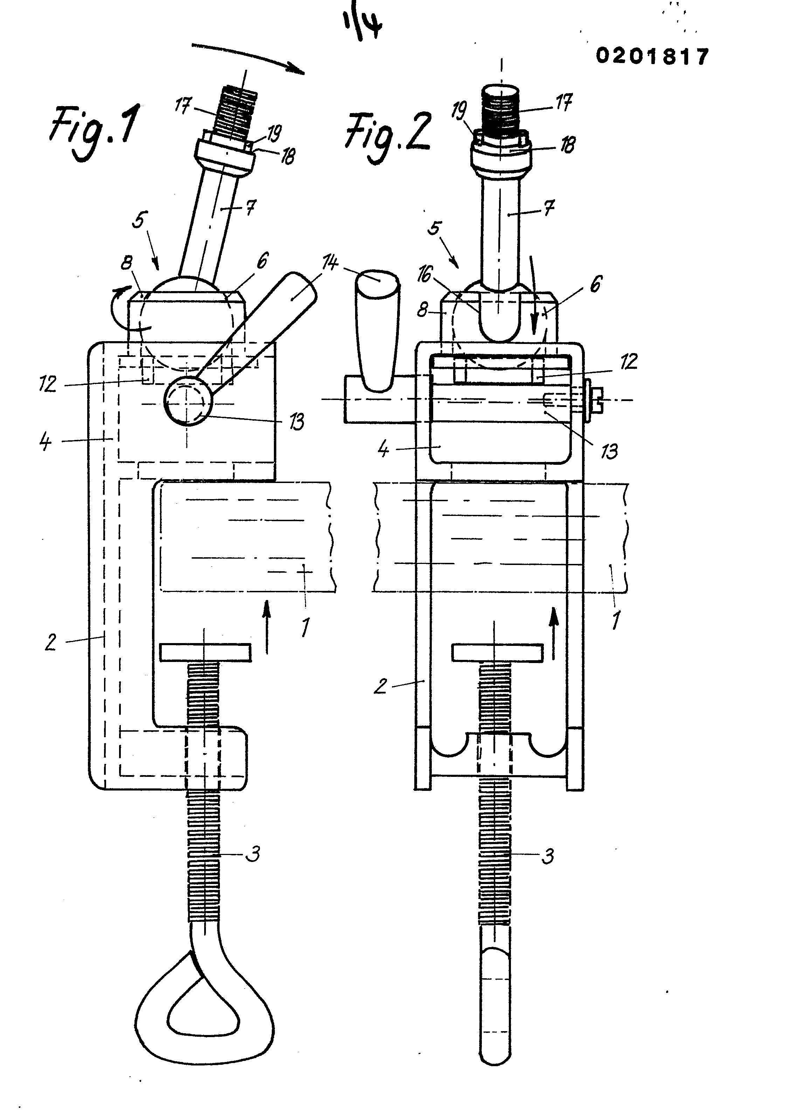

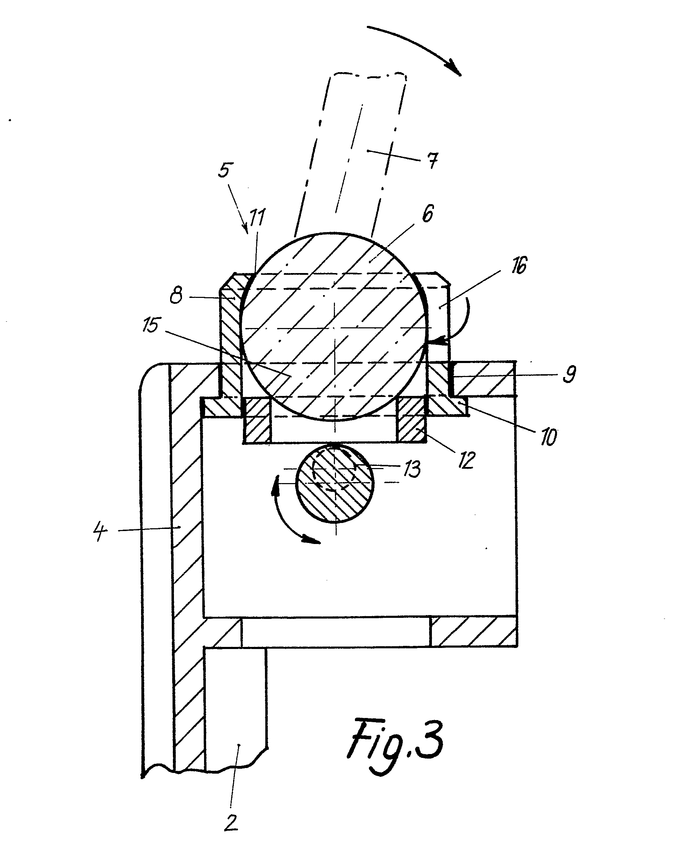

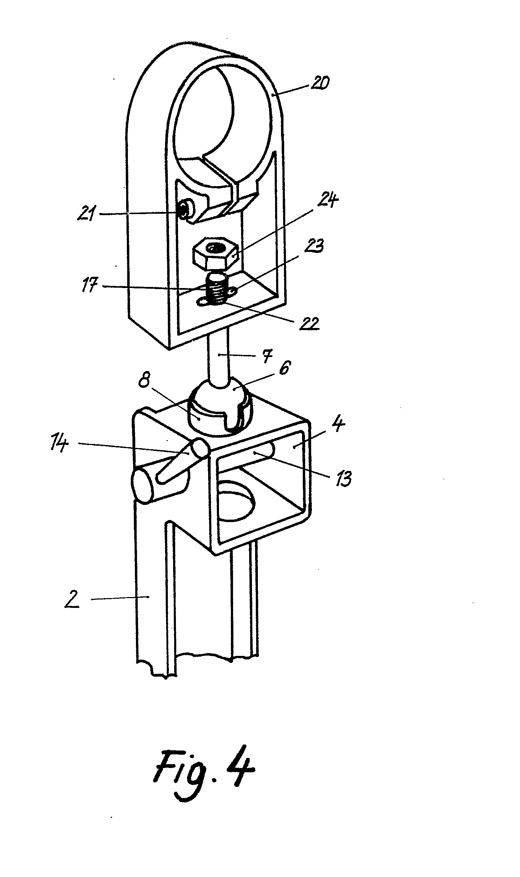

Wie aus der Zeichnung nach Figur 1 bis 3 ersichtlich wird, besteht der Universalhalter aus einer am Werktisch befestigbaren Schraubzwinge 2,3 mit Basisteil 4 und festspannbarem Kugelgelenk 5. Dieses Kugelgelenk 5 wird gebildet aus der Gelenkkugel 6 mit Tragstutzen 7 für einen Spannhalter, wie beispielsweise in Figur 4 bis 6 dargestellt.

Die Gelenkkugel 6 ist entsprechend Figur 3 in einer Napfhülse 8 als Kugelaufnahme gelagert, wobei die Napfhülse 8 von einer Lochung 9 am Basisteil 4 mit ihrem
Rand 10 beim Durchstecken anschlagend sitzt und der
Hutteil eine Austrittsöffnung 11 für den schwenkbaren
Tragstutzen 7 aufweist.

Das Gegenlager in Form einer Ringhülse 12 ist in der
Hutöffnung im Randteil 10 zylindrisch verschiebbar
und mittels Exzenterwelle 13 mit Hebel 14 mit der Ringkante 15 an der Gelenkkugel 6 gegenspannbar. Hierfür
ist bei verhältnismäßig weichem Kugelmaterial, z.B.
Kunststoff oder Zinkguß, der verschiebbare Gegenlagerring 12 mit seiner Ringkante 15 aus hartem Material,
wie z.B. Stahl, gebildet, wodurch eine sichere Fixierung
in der gewünschten Stellung des Tragstutzen 7 ohne zu
große Spannkräfte erreicht wird.

Das Hutteil der Napfhülse 8 weist an der Austrittsöffnung 11 für Tragstutzen 7 anschließend einen Seitenschlitz 16 auf zum Schwenken des Tragstutzens 7 bis
zu 90°, während der Hutteil drehbar in der Lochung 9
am Basisteil 4 sitzt. Am freien Ende ist der Tragstutzen 7 mit einem Gewindeende 17 sowie an seinem
Setzrand 18 mit Querrippen 19 versehen zum drehgesicherten
Aufnehmen eines Spannhalters.

In Figur 4 ist beispielsweise ein Spannhalter in Form
eines Spannauges 20,21 dargestellt für die Halterung
des Maschinenhalses, z.B. von handgeführten Heimwerkbohrmaschinen. Das Spannauge 20 besitzt hierfür eine Bohrung 22 mit Flügelschlitzen 23 zum Aufsetzen am Gewindeende 17 mit Setzrand 18 und Drehsicherung mittels eingreifender Querrippe 19 nach Verschraubung 24.

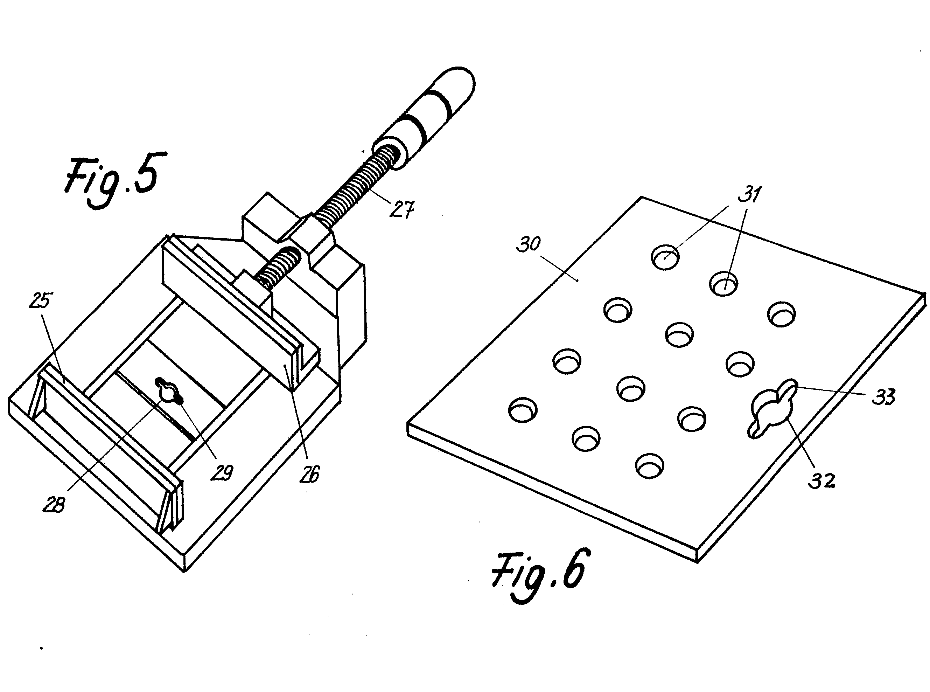

In Figur 5 ist beispielsweise ein Spannhalter in Form von Spannbacken 25,26 nach Art eines Schraubstocks mit Spanngewinde 27 dargestellt für das Spannen von Werkstücken. Auch hierbei ist wiederum eine Bohrumg 28 mit Flügelschlitzen 29 zum Aufsetzen am Gewinde 17 mit Setzrand 18 und Drehsicherung mittels eingreifender Querrippe 19 nach Verschraubung entsprechend dem vorhergehenden Ausführungsbeispiel vorgesehen.

Schließlich ist in Figur 6 noch eine Werkplatte 30 mit Schraublöchern 31 als Spannhalter dargestellt. Hierbei kann das Werkstück, z.B. Schnitzholz auf der Werkplatte festgeschraubt werden. Auch hier ist wiederum eine Bohrung 32 mit Flügelschlitzen 33 zum Aufsetzen am Gewindeende 17 mit Setzrand 18 und Drehsicherung mittels eingreifender Querrippen 19 nach Verschraubung entsprechend den vorhergehenden Ausführungsbeispielen vorgesehen.

0201817

Herren Reinhold und Karl Reiling, 7535 Königsbach-Stein

"Universalhalter"

Patentansprüche:

1.     Universalhalter mit Basisteil, insbes. in Form einer an einem Werktisch befestigbaren Schraubzwinge und einer Halterung für Bearbeitungsvorrichtungen oder -maschinen mit in gewählter Stellung festlegbarem Kugelgelenk, wobei die Gelenkkugel mit Tragstutzen für einen Spannhalter in einer Kugelaufnahme mittels Gegenlager verspannbar ist und diese durch zwei zueinander verschiebbare Napfhülsen gebildet sind, an welchen einerseits der Tragstutzen schwenkbar austritt, während andererseits das Gegenlager durch Verschieben gegen die Gelenkkugel zu deren Festlegung anpressbar ist, dadurch gekennzeichnet, daß bei verhältnismäßig weichem Material der Gelenkkugel (6), z.B. Kunststoff oder Zinkguß, in der Kugelaufnahme (Napfhülse 8) das verschiebbare Gegenlager in Form einer Ringhülse (12) aus hartem Material, z.B. Stahl,gebildet ist und der Gelenkkugel (6) mittels Ringkante (15) zum Festspannen anliegt.

2. Universalhalter nach Anspruch 1, dadurch gekennzeichnet, daß die Kugelaufnahme als Napfhülse (8)
mit Austrittsöffnung (11) und Seitenschlitz (16) für
den Tragstutzen (7) mit Randteil (10) drehbar in einer
Lochung (9) am Basisteil (4) sitzt.

3. Universalhalter nach Anspruch 1 und 2, dadurch gekennzeichnet, daß die Ringhülse (12) als Gegenlager
unmittelbar einer exzentrischen Welle (13) mit Schwenkhebel
(14) zum Gegenspannen aufsitzt und über die Gelenkkugel
(6) auch die Napfhülse (8) dreh- und spannbar hält.

4. Universalhalter nach einem der Ansprüche 1 bis 3,
dadurch gekennzeichnet, daß das freie Ende des Tragstutzens (7) der Gelenkkugel (6) mit einem Gewinde (17)
versehen ist und einen Setzrand (16) mit Querrippen (19)
aufweist zum drehgesicherten Aufsetzen eines Spannhalters.

5. Universalhalter nach einem der Ansprüche 1 bis 3,
dadurch gekennzeichnet, daß der Spannhalter für handgeführte Maschinen aus einem Spannauge (20,21) für den
Maschinenhals besteht.

6. Universalhalter nach einem der Ansprüche 1 bis 3,
dadurch gekennzeichnet, daß der Spannhalter für
Werkstücke aus Spannbacken (25,26) besteht

7. Universalhalter nach einem der Ansprüche 1 bis 3,
dadurch gekennzeichnet, daß der Spannhalter aus einer
Werkplatte (30) mit Schraublöchern (31) zur Werkstückbefestigung besteht.

1/4

0201817

Fig.1

Fig.2

0201817

*Fig.3*

Fig. 4

0201817

Fig.6

Fig.5